# FASCICULE DE BREVET EUROPEEN

(11) **EP 0 811 544 B1**
(45) Date de publication et mention de la délivrance du brevet: **29.03.2000**
(21) Numéro de dépôt: 97401270.0
(22) Date de dépôt: 05.06.1997
(51) Int. Cl.: B62D 21/15, F16F 7/12

(54) **Poutre d'absorption d'énergie, notamment pour longeron ou traverse d'un véhicule automobile**
Energieabsorptionsträger, insbesondere für Längsträger oder Querträger von Kraftfahrzeugen
Energy absorption beam, particularly for longitudinally or traversely arranged frame members of motor cars

(30) Priorité: 06.06.1996 FR 9607009
(43) Date de publication de la demande: 10.12.1997
(73) Titulaire: AUTOMOBILES PEUGEOT, 75116 Paris (FR); AUTOMOBILES CITROEN, 92200 Neuilly-sur-Seine (FR)
(72) Inventeur: Clement, Daniel, 78170 La Celle-Saint-Cloud (FR)
(74) Mandataire: Lanceplaine, Jean-Claude

(56) Documents cités:
- DE-A- 2 137 517
- GB-A- 2 115 359
- US-A- 3 599 757
- US-A- 3 813 961
- US-A- 4 684 151
- US-A- 4 702 515
- US-A- 5 431 445
- PATENT ABSTRACTS OF JAPAN vol. 007, no. 223 (M-247), 4 octobre 1983 & JP 58 116267 A (TOYO KOGYO KK), 11 juillet 1983,

## Description

La présente invention a pour objet une poutre d'absorption d'énergie destinée à former notamment un longeron ou une traverse d'un véhicule automobile.

Les véhicules automobiles sont équipés d'éléments de structure constitués de longerons et de traverses qui sont conçus pour assurer plusieurs fonctions.

En effet, les longerons et les traverses sont destinés à servir de support et de points d'ancrage à différents organes, comme par exemple le moteur, le train avant ou arrière et les éléments de la caisse du véhicule et à participer à la bonne tenue en torsion et en flexion de cette caisse.

D'autre part, ces longerons et ces traverses doivent absorber un maximum d'énergie afin d'éviter aux passagers de subir une décélération trop importante en cas de choc du véhicule.

Dans le cas où la structure du véhicule ne joue pas ce rôle et n'absorbe pas suffisamment d'énergie en cas de choc, des lésions sinon mortelles du moins graves et irréversibles peuvent se produire sur les passagers même en cas de choc peu violent.

On connaît des poutres d'absorption d'énergie qui présentent une section transversale rectangulaire et sensiblement constante sur toute leur longueur.

Mais, ce type de poutres d'absorption d'énergie ne permet pas de subir avec succès les normes imposées dans le domaine de la sécurité des véhicules automobiles, car elles n'absorbent pas suffisamment d'énergie lors de leur déformation si bien qu'une trop grande décélération est transmise aux occupants.

Afin de répondre aux normes de sécurité, on connaît des poutres d'absorption d'énergie pour véhicules automobiles qui comportent des nervures réparties sur toute la longueur de la poutre ou qui présentent un profil évolutif.

Mais, ce genre de poutres d'absorption d'énergie ont pour inconvénient de ne pas absorber l'énergie de manière homogène et continue ce qui provoque au niveau des passagers une décélération par à coups.

L'invention a pour but d'éviter ces inconvénients en proposant une poutre d'absorption d'énergie destinée à former, notamment un longeron ou une traverse de véhicules automobiles, qui présente une configuration permettant de contrôler et de programmer la chronologie des déformations, tout en absorbant un maximum d'énergie lors d'un choc, et d'obtenir au niveau des passagers une décélération constante.

L'invention a donc pour objet une poutre d'absorption d'énergie, notamment pour longeron ou traverse d'un véhicule automobile, caractérisée en ce qu'elle comprend un caisson de forme allongée et de section transversale rectangulaire et comportant sur deux côtés opposés une succession de portions convexes séparées par des portions planes et sur les deux autres côtés opposés une succession de portions concaves séparées par des portions planes.

Selon d'autres caractéristiques de l'invention :
- les portions convexes et les portions concaves sont en vis à vis les unes des autres,
- la longueur des portions convexes et des portions concaves est variable selon leur emplacement sur le caisson, en fonction des déformations à obtenir,
- la profondeur des portions convexes et des portions concaves est variable selon leur emplacement sur le caisson, en fonction des déformations à obtenir,
- le caisson est formé par deux profilés en forme de U, emboutis et assemblés entre eux par soudage,
- le caisson est réalisé par hydroformage d'un tube.

D'autres caractéristiques et avantages de l'invention apparaîtront au cours de la description qui va suivre, donnée uniquement à titre d'exemple et faite en référence aux dessins annexés, sur lesquels,
- la Fig. 1 est une vue schématique en perspective d'un premier mode de réalisation d'une poutre d'absorption d'énergie, conforme à l'invention,
- la Fig. 2 est une vue schématique en coupe selon un plan vertical P1 passant par l'axe de la poutre représentée à la Fig.1,
- la Fig. 3 est une vue schématique en coupe selon un plan horizontal P2 passant par l'axe de la poutre représentée à la Fig. 1,
- la Fig. 4 est une vue schématique en perspective d'un second mode de réalisation d'une poutre d'absorption d'énergie, conforme à l'invention.

Sur les figures, on a représenté schématiquement une poutre d'absorption d'énergie destinée à former notamment un longeron ou une traverse d'un véhicule automobile.

Cette poutre d'absorption d'énergie se compose d'un caisson désigné dans son ensemble par la référence 1, de forme allongée et de section transversale rectangulaire comportant quatre côtés, respectivement A, B, C et D.

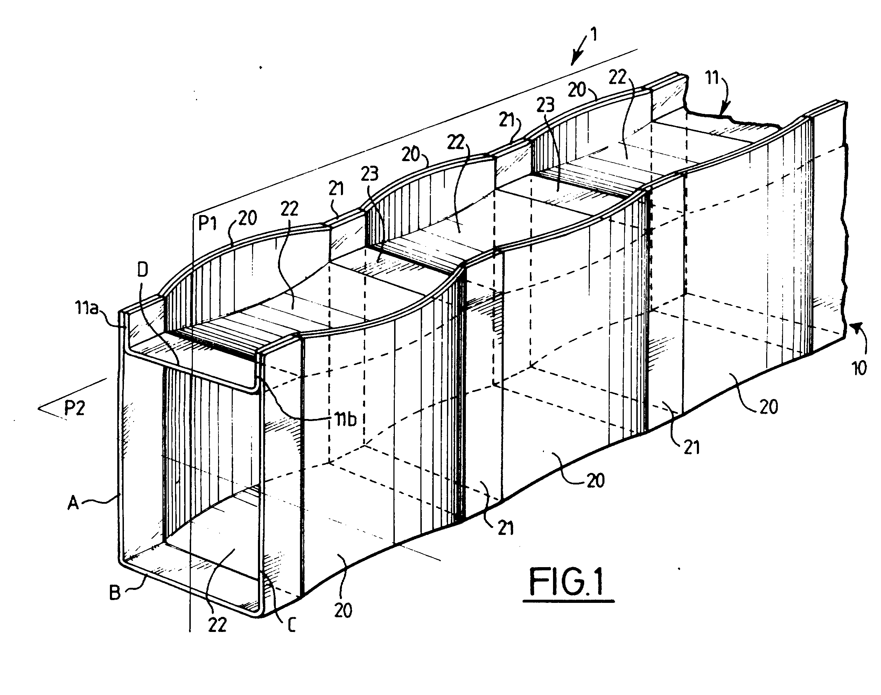

Selon un premier mode de réalisation représenté sur les Fig. 1 à 3, le caisson 1 est formé par deux profilés en forme de U, respectivement 10 et 11.

Le profilé 10 forme les côtés A, B et C et le profilé 11 forme le côté D du caisson 1.

Le profilé 11 comporte deux ailes parallèles, respectivement 11a et 11b, et ce profilé 11 est emboîté dans le profilé 10 de telle manière que les bords libres des ailes 11a et 11b soient sensiblement alignés avec les bords libres des côtés A et C du profilé 10, comme représenté sur la Fig. 1.

Dans ce cas, le côté D est en retrait par rapport aux bords libres des côtés A et C.

Les profilés 10 et 11 sont assemblés entre eux par soudage par exemple par points.

Selon une variante, le profilé 11 est emboîté dans le profilé 10 de telle manière que le côté D soit sensiblement aligné avec les bords libres des côtés A et C.

Ainsi que représenté sur les Figs. 1 à 3, les côtés A et C du caisson 1 comporte des portions convexes 20 séparées par des portions planes 21 et les côtés B et D de ce caisson 1 comportent des portions concaves 22 séparées par des portions planes 23.

De préférence, les portions convexes 20 et les portions concaves 22 sont en vis à vis les unes des autres.

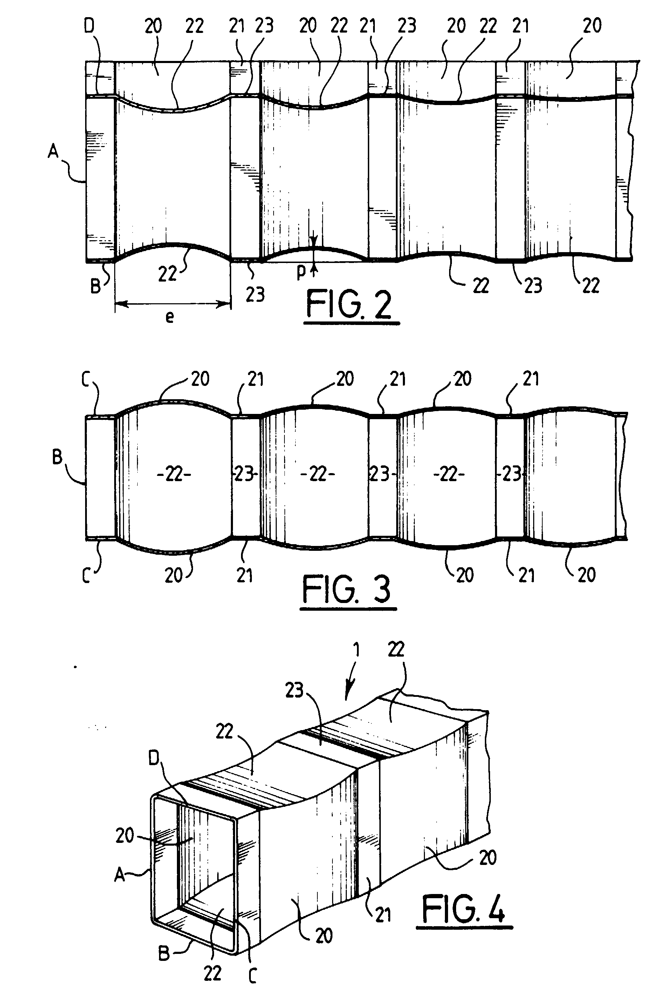

De préférence et comme cela apparaît sur les figures 2 et 3, la longueur 1 et/ou la profondeur p des portions convexes 20 et des portions concaves 22 sont variables selon leur emplacement sur le caisson 1 et en fonction des déformations à obtenir.

Par exemple, la longueur 1 et la profondeur p des portions convexes 20 et des portions concaves 22 diminuent progressivement de la partie avant du caisson 1 vers sa partie arrière.

Suivant une variante, les portions convexes 20 peuvent être réalisées sur les côtés B et D du caisson 1 et les portions concaves 22 peuvent être réalisées sur les côtés A et C de ce caisson 1.

Les portions convexes 20 et les portions concaves 22 sont réalisées par exemple par emboutissage.

Selon un second mode de réalisation représenté à la Fig.4, le caisson 1 est réalisé par hydroformage d'un tube.

Ce caisson 1 de forme allongée et section transversale rectangulaire comporte également quatre côtés, respectivement A, B, C et D.

Les côtés A et C comportent une succession de portions convexes 20 séparées par des portions planes 21 et les côtés B et D comportent une succession de portions concaves 22 séparées par des portions planes 23.

De préférence, les portions convexes 20 et les portions concaves 22 sont en vis à vis les unes des autres.

Dans ce cas également, la longueur et/ou la profondeur des portions convexes 20 et des portions concaves 22 sont variables selon leur emplacement sur le caisson et en fonction des déformations à obtenir.

Par exemple, la longueur et/ou la profondeur des portions convexes 20 et des portions concaves 22 diminuent progressivement de la partie avant du caisson 1 vers sa partie arrière.

Lors d'un choc dans l'axe du caisson 1, les portions convexes 20 et les portions concaves 22 permettent d'initialiser dans des zones déterminées les déformations à obtenir si bien que la poutre se plie sans flambement au niveau de ces portions convexes et concaves.

Ainsi, en jouant sur la profondeur et/ou la longueur des portions convexes et concaves, on maîtrise les déformations lors d'un choc et on programme la chronologie des déformations de l'avant vers l'arrière de la poutre.

La poutre d'absorption d'énergie selon l'invention destinée à former un longeron ou une traverse pour véhicules automobiles permet, grâce à la succession de portions convexes et concaves, de maîtriser et de programmer les déformations et donc d'obtenir une meilleur absorption d'énergie et une décélération plus constante avec un effort moindre au début du choc.

## Revendications

1. Poutre d'absorption d'énergie, notamment pour longeron ou traverse d'un véhicule automobile, caractérisée en ce qu'elle comprend un caisson (1) de forme allongée et de section transversale rectangulaire et comportant sur deux côtés opposés une succession de portions convexes (20) séparées par des portions planes (21) et sur les deux autres côtés opposés une succession de portions concaves (22) séparées par des portions planes (23).

2. Poutre selon la revendication 1, caractérisée en ce que les portions convexes (20) et les portions concaves (22) sont en vis à vis les unes des autres.

3. Poutre selon les revendications 1 et 2, caractérisée en ce que la longueur des portions convexes (20) et des portions concaves (22) est variable selon leur emplacement sur le caisson (1), en fonction des déformations à obtenir.

4. Poutre selon les revendications 1 et 2, caractérisée en ce que la profondeur des portions convexes (20) et des portions concaves (22) est variable selon leur emplacement sur le caisson, en fonction des déformations à obtenir.

5. Poutre selon l'une quelconque des revendications précédentes, caractérisée en ce que le caisson (1) est formé par deux profilés (10, 11) en forme de U, emboutis et assemblés entre eux par soudage.

6. Poutre selon l'une quelconque des revendications 1 à 4, caractérisée en ce que le caisson (1) est réalisé par hydroformage d'un tube.

## Patentansprüche

1. Energieabsorptionsträger, insbesondere als Längs- oder Querträger eines Kraftfahrzeugs, dadurch gekennzeichnet, daß er einen länglichen Kasten (1) mit rechteckigem Querschnitt aufweist und auf zwei gegenüberliegenden Seiten eine Folge von durch ebene Teile (21) getrennten konvexen Teilen (20) und auf den beiden anderen gegenüberliegenden Seiten eine Folge von durch ebene Teile (23) getrennten konkaven Teilen (22) besitzt.

2. Träger nach Anspruch 1, dadurch gekennzeichnet, daß die konvexen Teile (20) und die konkaven Teil (22) einander gegenüberliegen.

3. Träger nach den Ansprüchen 1 und 2, dadurch gekennzeichnet, daß die Länge der konvexen Teile (20) und der konkaven Teile (22) nach Maßgabe der zu erreichenden Verformungen in Abhängigkeit von ihrer Position im Kasten (1) variabel ist.

4. Träger nach den Ansprüchen 1 und 2, dadurch gekennzeichnet, daß die Tiefe der konvexen Teile (20) und der konkaven Teile (22) nach Maßgabe der zu erreichenden Verformungen in Abhängigkeit von ihrer Position im Kasten variabel ist.

5. Träger nach einem der vorstehenden Ansprüche, dadurch gekennzeichnet, daß der Kasten (1) durch zwei U-Profile (10, 11) gebildet wird, die zusammengesetzt und durch Schweißen miteinander verbunden sind.

6. Träger nach einem der Ansprüche 1 bis 4, dadurch gekennzeichnet, daß der Kasten (1) durch hydrostatisches Ziehen aus einem Rohr hergestellt ist.

## Claims

1. Energy absorption beam, particularly for a side member or cross member of a motor vehicle, characterized in that it comprises an elongated box (1) having a rectangular cross-section and having on two opposite sides a succession of convex portions (20) separated by planar portions (21) and on the two other, opposite sides a succession of concave portions (22) separated by planar portions (23).

2. Beam according to claim 1, characterized in that the convex portions (20) and concave portions (22) face one another.

3. Beam according to claims 1 and 2, characterized in that the length of the convex portions (20) and the concave portions (22) varies as a function of their location on the box (1) and the deformations to be obtained.

4. Beam according to claims 1 and 2, characterized in that the depth of the convex portions (20) and concave portions (22) varies as a function of their location on the box and the deformations to be obtained.

5. Beam according to any one of the preceding claims, characterized in that the box (1) is formed by two stamped, U-shaped sections (10, 11) assembled with one another by welding.

6. Beam according to any one of the claims 1 to 4, characterized in that the box (1) is produced by hydroforming a tube.
